(19) Europäisches Patentamt
European Patent Office
Office européen des brevets

(11) EP 0 702 709 B1

(12) EUROPEAN PATENT SPECIFICATION

(45) Date of publication and mention of the grant of the patent:
**28.01.1998 Bulletin 1998/05**

(21) Application number: **94916017.0**

(22) Date of filing: **10.05.1994**

(51) Int Cl.6: **C09D 133/06**, C09D 127/12, C09D 163/00

(86) International application number:
**PCT/US94/04963**

(87) International publication number:
**WO 94/26830 (24.11.1994 Gazette 1994/26)**

# (54) ANHYDRIDE-EPOXY COATING COMPOSITION MODIFIED WITH A FLUOROPOLYMER

ANHYDRID-EPOXY ÜBERZUGSZUSAMMENSETZUNG, MODIFIZIERT MIT EINEM FLUORPOLYMER

COMPOSITION DE REVETEMENT A BASE D'ANHYDRIDE-EPOXY MODIFIEE PAR UN FLUOROPOLYMERE

(84) Designated Contracting States:
**DE FR GB IT NL**

(30) Priority: **14.05.1993 US 61984**

(43) Date of publication of application:
**27.03.1996 Bulletin 1996/13**

(73) Proprietor: **E.I. DU PONT DE NEMOURS AND COMPANY**
**Wilmington Delaware 19898 (US)**

(72) Inventors:
- **BARSOTTI, Robert, John**
  **Franklinville, NJ 08322 (US)**
- **ANDERSON, Albert, Gordon**
  **Wilmington, DE 19808 (US)**

(74) Representative: **Jones, Alan John**
**CARPMAELS & RANSFORD**
**43 Bloomsbury Square**
**London, WC1A 2RA (GB)**

(56) References cited:
**EP-A- 0 249 048** **EP-A- 0 572 254**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 702 709 B1

## Description

### BACKGROUND OF THE INVENTION

This invention relates to an anydride-epoxy coating composition modified with a fluoropolymer for improved durability.

There are a wide variety of multi-component coating compositions available for finishing automobiles and trucks. Various coating compositions comprising anhydride and/or epoxy compositions are known. For example, U.S. Patent 4,906,677 discloses a composition comprising an acrylic anhydride polymer, a glycidyl component, and a phosphonium catalyst.

Coating compositions containing fluorinated polymers are known. For example, U.S. Patent 4,581,412 discloses a room temperature curing coating composition comprising copolymers of vinylidene fluoride with other functional ethylenically unsaturated monomers, which may also be fluorinated, wherein the functional groups are selected from carboxyl, hydroxyl and glycidyl.

EP-A-0572254 discloses a thermosetting resin composition which provides cured film having not only excellent acid resistance but also good weather resistance, good mar resistance and high water repellency. The thermosetting resin composition comprises (a) a fluorinated polymer having a hydroxyl group and/or an acid group, (b) a polymer having a carboxyl group and a carboxyl ester, and (c) a polymer having a hydroxyl group and an epoxy group. EP-A-0249048 discloses non-fluorinated epoxy resins of known type crosslinked by means of polyfunctional perfluoropolyethers containing groups which are reactive with the epoxy groups and/or with the hydroxy groups present in the starting resin. The thus-obtained crosslinked products having a fluorine content of not more than 20% by weight, preferably from 5% to 15%, have properties typical of the corresponding fluorinated resins with a much higher fluorine content, in particular, water and oil-repellence, resistance to hydrolysis and to solvents and minimum water absorption.

There exists a need to improve durability of coating compositions for automobiles and trucks, or parts thereof. An important aspect of durability is environmental resistance. The present invention offers a high quality finish exhibiting superior environmental resistance. Such a coating composition exhibits excellent adhesion to the substrate to which it is applied, good outdoor weatherability, etch and mar resistance, and gloss.

### SUMMARY OF THE INVENTION

The invention is a coating composition comprising 20-80% by weight of binder components (a), (b), (c) and (d), and 80-20% by weight of organic liquid solvent, wherein said binder components comprise, based on the weight of binder:

(a) 25-90% by weight of an acrylic anhydride polymer having at least two reactive anhydride groups and comprising polymerized monomer units of (i) an ethylenically unsaturated anhydride or an ethylenically unsaturated dicarboxylic acid which has been converted to an anhydride, and (ii) monomer units selected from alkyl methacrylate, alkyl acrylate and mixtures thereof, wherein the alkyl groups contain 1-12 carbon atoms, said polymer having a weight average molecular weight of about 2,000-50,000;
(b) 5-30% by weight of an oxiranyl component having at least two reactive oxiranyl groups ;
(c) 1-30% of a fluorinated polymer having a number average molecular weight of 200-20,000 and having at least one perfluorocarbon group of at least 4 carbon atoms, and at least one functional group that can react with component (a) and/or component (b);
(d) an effective amount of a curing catalyst; wherein components (a), (b) and (c) are separate components; and

optional component (e) comprising 5-30%, by weight based on the weight of binder, of one or more resins selected from acrylic, polyester and polyester urethane that may contain hydroxyl and/or acid functionality. The binder components may also comprise about 2 to 25%, preferably 4-12%, by weight of binder, of the half-ester of an acid anhydride.

In preferred embodiments of the present invention, at least one functional group in component (c) is a terminal or pendant group selected from oxiranyl, hydroxyl, carboxyl, isocyanate, and reactive derivatives thereof.

### DETAILED DESCRIPTION OF THE INVENTION

The composition of the present invention forms a durable, environmentally resistant coating for a variety of substrates including plastic, metal, glass, silicon, concrete and wood. The composition is especially useful for finishing the exteriors of automobiles and trucks.

The composition can also be pigmented to form a colored finish, although the composition is particularly useful as a clearcoat.

The coating composition has a high solids content and contains about 20-80% by weight of binder and 80-20% by weight of organic liquid solvent. The binder of the composition comprises about 25-90%, preferably 35-65% by weight of binder, of an acrylic anhydride polymer component (a) containing at least two anhydride groups; 5-30%, preferably 10-20% by weight of binder, of an oxiranyl-containing component (b), and about 1-30%, preferably 5-20% of a fluorinated polymer component (c) containing at least one perfluorocarbon group of at least 4 carbon atoms and also containing at least one functional group that can react with the anhydride groups of component (a) and/or the oxiranyl groups of component (b).

The acrylic anhydride polymer contained in the present composition has a weight average molecular weight of about 2,000-50,000 as determined by gel permeation chromatography with polymethyl methacrylate as a standard. Preferably, the anhydride polymer has a weight average molecular weight of 3,000-25,000.

The acrylic anhydride polymer component (a) is formed by polymerizing one or more monomers of alkyl methacrylates, alkyl acrylates, or mixtures thereof, where the alkyl groups have 1-12 carbon atoms, and ethylenically unsaturated anhydrides, or ethylenically unsaturated dicarboxylic acids which are converted to the acid anhydride during the polymerization. Optionally, the acrylic anhydride polymer can contain other monomeric components such as styrene, methyl styrene, acrylonitrile, and/or methacrylonitrile monomer units in amounts of about 0.1-50% by weight.

The anhydride polymer of component (a) may be prepared by conventional techniques in which the monomers, solvent, and conventional catalysts such as t-butyl perbenzoate are charged into a polymerization vessel and heated to about 75-200°C for about 0.5-6 hours to form the polymer.

Typical alkyl acrylates and methacrylates that can be used to form the acrylic anhydride polymer of component (a) are methyl methacrylate, ethyl methacrylate, propyl methacrylate, butyl methacrylate, pentyl methacrylate, hexyl methacrylate, octyl methacrylate, decyl methacrylate, lauryl methacrylate, methyl acrylate, ethyl acrylate, propyl acrylate, butyl acrylate, octyl acrylate, nonyl acrylate, decyl acrylate and lauryl acrylate. Other components that can be used to form the acrylic anhydride polymer are acrylamide, and methacrylamide. Also, the acrylic anhydride polymer can contain about 0.1-5% by weight of copolymeric units of an ethylenically unsaturated acid such as acrylic acid, methacrylic acid, itaconic acid and maleic acid.

Typically useful ethylenically unsaturated anhydrides are itaconic anhydride, maleic anhydride and isobutenyl succinic anhydride. It is also possible to impart the anhydride functionality to the acrylic anhydride polymer by using an ethylenically unsaturated dicarboxylic acid which converts to the acid anhydride during the polymerization reaction. Suitable ethylenically unsaturated dicarboxylic acids that can be used are itaconic acid, maleic acid and isobutenyl succinic acid.

A preferred anhydride polymer for use as component (a) is the copolymerization product of styrene, butyl methacrylate, butyl acrylate, and itaconic acid, the latter being converted to an anhydride during polymerization. Another preferred anhydride polymer comprises styrene, butyl methacrylate, butyl acrylate, and itaconic anhydride. Still another preferred anhydride polymer comprises butyl acrylate, styrene, maleic anhydride, and butyl methacrylate.

The oxiranyl component (b) contains at least two oxiranyl groups per molecule and can be an oligomer or a polymer. The oxiranyl groups are preferably glycidyl groups. Typical glycidyl components are sorbitol polyglycidyl ether, mannitol polyglycidyl ether, pentaerythritol polyglycidol ether, glycerol polyglycidyl ether, low molecular weight oxiranyl resins such as epoxy resins of epichlorohydrin and bisphenol A, di- and polyglycidyl esters of acids, polyglycidyl ethers of isocyanurates, such as Denecol EX301® from Nagase. Sorbitol polyglycidyl ethers, such as DCE-358® from Dixie Chemical Co., and di- and polyglycidyl esters of acids, such as Araldite CY-184® from Ciba-Geigy or XUS-71950® from Dow Chemical, form high quality finishes. Cycloaliphatic epoxies such as CY-179® from Ciba-Geigy may also be used.

Acrylic polymers containing glycidyl methacrylate or glycidyl acrylate can be used, such as random and block polymers of glycidyl methacrylate/butyl methacrylate. The block polymers can be prepared by anionic polymerization or by group transfer polymerization.

The fluorinated polymers useful in the coating compositions of the present invention have number average molecular weights in the range of about 200 to 20,000, and weight average molecular weights of about 400 to 100,000. The term "polymer" as used herein includes oligomers such as, for example, tetrafluoroethylene oligomers, which have molecular weights within the above range.

A suitable fluorinated polymer is the product of polymerization of one or more ethylenically unsaturated monomers at least one of which contains fluorine. The polymer has one or more perfluorocarbon groups which contain at least 4 carbon atoms, and at least one functional group that can react with the anhydride polymer component and/or the epoxy resin component of the coating composition. The fluorinated polymer may contain about 20 to 100% by weight of repeat units derived from fluorinated monomers, the remainder of the polymer being from non-fluorinated ethylenically unsaturated monomers or other non-fluorinated monomers. Preferably the fluorinated polymer contains about 50 to 100% by weight of fluorinated repeat units.

Fluorinated polymers that are unreactive with the anhydride polymer component and/or the epoxy resin component are unsuitable because of a tendency to "bloom" to the surface in an unbound state during coating application or use,

and/or incompatibility with other components which cause haziness in the coatings.

In the preparation of the fluorinated polymer, fluorinated monomers may be copolymerized, or suitable non-fluorinated monomers may be copolymerized with fluorinated monomers, normally by free-radical initiated addition polymerization. Alternatively, as illustrated in Examples 2 and 3 herein, a fluorinated polymer or "prepolymer" may be reacted with a non-fluorinated compound to form a second fluorinated polymer that can react with at least one of the other major binder components and has increased compatibility with said components.

Suitable fluorinated monomers used to form the fluorinated polymer include, but are not limited to, those of the formula $CF_2$=CFX
wherein:

X is -H, -Cl, -F, $-R_f$, $-OR_f$, $-R'_f$-Y or $-OR'_f$-Y;
$-R_f$ is $C_{1-4}$ perfluoroalkyl;
$-R'_f$ is $C_{1-4}$ perfluoroalkylene or $-[CF_2OCF(CF_3)]_m[CF_2]_p-$;
-Y is -OH, $-CO_2H$, $-CO_2R$, -CN,

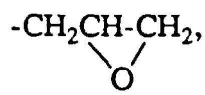

or

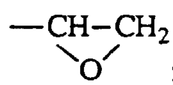
;

m is an integer of 1-6 and p is an integer of 1-3; and
R is $C_{1-6}$ alkyl, alkali metal, ammonium or quaternary ammonium.

Typical examples of such fluorinated monomers include tetrafluoroethylene, chlorotrifluoroethylene, perfluoropropylene, perfluoroalkylvinyl ethers such as perfluoromethylvinyl ether, perfluorobutylvinyl ether, perfluorocyclohexylvinyl ether, perfluorohydroxybutylvinyl ether, and adducts of such ethers with hexafluoropropene oxide.

Suitable non-fluorinated monomers which may be copolymerized with fluorinated monomers to make the fluoropolymer include, but are not limited to, those of the formula $CH_2$=CHOZ
wherein:

Z is $C_{1-6}$ alkyl or $-R^1Y^1$;
$R^1$ is $C_{1-6}$ alkylene;
$Y^1$ is -OH or -O(CO)R; and
R is defined as above.

Typical examples of such non-fluorinated monomers include alkylvinyl ethers such as methylvinyl ether, butylvinyl ether, cyclohexylvinyl ether, and hydroxy-butylvinyl ether.

Preferred fluorinated polymers are functional derivatives of so-called "Telomer B" polytetrafluoro-ethylene oligomers selected from

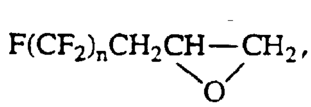

$F(CF_2)_nCH_2CH_2-Y^1$ and
$[F(CF_2)_nCH_2CH_2-O(CO)]_qR^2$ wherein:

$Y^1$ is defined as above;
n is 4 to about 20;

q is 2 or 3; and
$R^2$ is a di- or trivalent hydrocarbyl group of up to 6 carbon atoms also containing at least one terminal -OH group.

Particularly suitable fluorinated polymers are prepared by reacting the glycidyl functional Telomer B derivative,

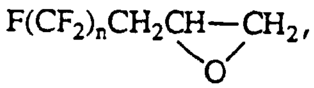

with an excess of a half-ester reaction product of a monomeric dicarboxylic acid anhydride such as hexahydrophthalic anhydride or succinic anhydride, which may be substituted, for example, with a $C_{1-8}$ alkyl group, and a monofunctional or polyfunctional alcohol such as methanol or ethylene glycol. The fluorinated half-ester may contain a pendant carboxyl group and/or a hydroxyl group which contribute to crosslinking of the coating composition of the invention.

A suitable fluorinated polymer can also be prepared by reacting said glycidyl functional Telomer, B, derivative with part of the anhydride resin i.e. acrylic anhydride polymer (a) used as a binder component in the invention coating compositions.

In addition to binder components (a), (b), (c), and (d), the present composition may optionally include component (e) comprising about 5 to 30%, preferably 10 to 25%, based on the weight of the binder components, of an acrylic, polyester or polyester urethane polymer, or copolymer thereof which may also contain hydroxyl and/or acid functionality. If said functionality is hydroxyl, the hydroxyl number is about 20 to 120, preferably 70 to 100. If the functionality is acid, the acid number is about 20 to 120, preferably 75 to 95. These polymers have a weight average molecular weight of about 2,000 to 20,000, preferably 4,000-10,000. These polymers contribute to the outdoor weatherability of the coating prepared from this coating composition.

Polyester urethanes are a reaction product of a hydroxyl terminated polyester component and a polyisocyanate component, preferably, an aliphatic or cycloaliphatic diisocyanate. A polyester, which may be used alone or as the polyester component of a polyester urethane, may be suitably prepared from linear or branched chain diols, including ether glycols, or mixtures thereof or mixtures of diols and triols, containing up to and including 8 carbon atoms, or mixtures of such diols, triols, and polycaprolactone polyols, in combination with a dicarboxylic acid, or anhydride thereof, or a mixture of dicarboxylic acids or anhydrides, which acids or anhydrides contain up to and including 12 carbon atoms, wherein at least 75% by weight, based on the weight of dicarboxylic acid, is an aliphatic dicarboxylic acid.

Representative saturated and unsaturated polyols that can be reacted to form a polyester include alkylene glycols such as neopentyl glycol, ethylene glycol, propylene glycol, butane diol, pentane diol, 1,6-hexane diol, 2,2-dimethyl-1,3-dioxolane-4-methanol, 1,4-cyclohexane dimethanol, 2,2-dimethyl 1,3-propanediol, 2,2-bis(hydroxymethyl)propionic acid, and 3-mercapto-1,2-propane diol. Preferred are 1,6-hexanediol and butylene glycol.

Polyhydric alcohols, having at least three hydroxyl groups, may also be included to introduce branching in the polyester. Typical polyhydric alcohols are trimethylol propane, trimethylol ethane, pentaerythritol and glycerin. Trimethylol propane is preferred, in forming a branched polyester.

Polycaprolactone polyols may also be used in making the polyester. A preferred polycaprolactone, a triol, is Tone® FCP 310 (available from Union Carbide).

The carboxylic acids used in making the polyester component of the polyester urethane include the saturated and unsaturated polycarboxylic acids and the derivatives thereof. Aliphatic dicarboxylic acids used to form the polyester are as follows: adipic acid, sebacic acid, succinic acid, azelaic acid, dodecanedioic acid and 1,3 or 1,4-cyclohexane dicarboxylic acid. A preferred acid is adipic acid. Aromatic polycarboxylic acids include phthalic acid, isophthalic acid and terephthalic acid. Anhydrides may also be used, for example, maleic anhydride, phthalic anhydride and trimellitic anhydride.

Typical polyisocyanates that may be used to form the polyester urethane are as follows: isophorone diisocyanate which is 5-isocyanato-1(isocyanatomethyl)-1,3,3-trimethylcyclohexane, propylene-1,2-diisocyanate, butylene-1,2-diisocyanate, butylene-1,3-diisocyanate, hexamethylene-1,6-diisocyanate, methyl-2,6-diisocyanate caproate, octamethlyene-1,8-diisocyanate, 2,4,4-trimethylhexamethylene-1,6-diisocyanate, nonamethylene diisocyanate, 2,2,4-trimethylhexamethylene-1,6-diisocyanate, decamethylene-1,10-diisocyanate, 2,11-diisocyanato-dodecane, meta-phenylene diisocyanate, para-phenylene diisocyanate, toluene-2,4-diisocyanate, toluene-2,6-diisocyanate, xylene-2,4-diisocyanate, xylene-2,6-diisocyanate, dialkyl benzene diisocyanates such as methylpropylbenzene diisocyanate, methylethylbenzene diisocyanate, 2,2'-biphenylene diisocyanate, 3,3'-biphenylene diisocyanate, 4,4'-biphenylene diisocyanate, 3,3'-dimethyl-4,4'-biphenylene diisocyanate, methylene-bis(4-phenyl isocyanate), ethylene-bis(4-phenyl isocyanate), isopropylidene-bis(4-phenyl isocyanate), butylene-bis(4-phenylisocyanate), 2,2'-oxydiphenyl diisocyanate, 3,3'-oxydiphenyl diisocyanate, 4,4'-oxydiphenyl diisocyanate, 2,2'-ketodiphenyl diisocyanate, 3,3'-ketodiphenyl diisocyanate, 4,4'-ketodiphenyl diisocyanate, 2,2'-mercaptodiphenyl diisocyanate, 3,3'-mercaptodiphenyl diisocyanate,

4,4'-thiodiphenyl diisocyanate, 2,2'-diphenylsulfone diisocyanate, 3,3'-diphenylsulfone diisocyanate, 4,4'-diphenylsulfone diisocyanate, 2,2,-methylene-bis(cyclohexyl isocyanate), 3,3'-methylene-bis(cyclohexyl isocyanate), 4,4'-methylene-bis(cyclohexyl isocyanate), 4,4'-ethylene-bis(cyclohexyl isocyanate), 4,4'-propylene-bis-(cyclohexyl isocyanate), bis(paraisocyano-cyclohexyl)sulfide, bis(para-isocyanato-cyclohexyl)sulfone, bis(para-isocyano-cyclohexyl)ether, bis (para-isocyanato-cyclohexyl)diethyl silane, bis(para-isocyanato-cyclohexyl)diphenyl silane, bis(para-isocyanato-cyclohexyl)ethyl phosphine oxide, bis(para-isocyanato-cyclohexyl)phenyl phosphine oxide, bis(para-isocyanato-cyclohexyl)N-phenyl amine, bis(para-isocyanato-cyclohexyl)N-methyl amine, 3,3'-dimethyl-4,4'-diisocyano biphenyl, 3,3'-dimethoxy-biphenylene diisocyanate, 2, 4-bis(b-isocyanato-t-butyl)toluene, bis(para-b-isocyanato-t-butyl-phenyl) ether, para-bis(2-methyl-4-isocyanatophenyl)benzene, 3,3-diisocyanato adamantane, 3,3-diisocyano biadamantane, 3,3-diiso-cyanatoethyl-1'-biadamantane, 1,2-bis (3-isocyanato-propoxy)ethane, 2,2-dimethyl propylene diisocyanate, 3-methoxy hexamethylene-1,6-diisocyanate, 2,5-dimethyl heptamethylene diisocyanate, 5-methyl nonamethylene-1,9-diisocyanate, 1,4-diisocyanato cyclohexane, 1,2-diisocyanato octadecane, 2,5-diisocyanato-1,3,4-oxadiazole, $OCN(CH_2)_3O(CH_2)_2O(CH_2)_3NCO$, $OCN(CH_2)_3NCO$ or the following:

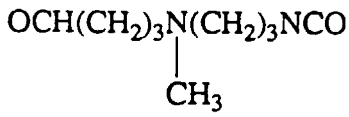

Aliphatic diisocyanates are preferred, which form urethanes that have excellent weatherability. One aliphatic diisocyanate that is particularly preferred is trimethyl hexamethylene-1,6-diisocyanate.

A preferred polyester urethane is the reaction product of trimethylhexamethylene-1,6-diisocyanate and a hydroxy terminated polyester of 1,3-butylene glycol, 1,6-hexanediol, adipic acid, trimethylolpropane, and Tone® FCP 310.

It is noted that a hydroxy functional polyester urethane can be converted to the corresponding acid functional polyester urethane by reaction with methylhexahydropthalic anhydride or other mono-anhydride such as succinic anhydride. Converting the hydroxy to the acid may result in longer pot life in the clearcoat.

A polyester may be prepared by conventional techniques in which the component polyols and carboxylic acids and solvent are esterified at about 110-250 °C. for about 1-10 hours to form a polyester. To form a polyester urethane, a diisocyanate may then be added and reacted at about 100 °C, for about 15 minutes to 2 hours.

In preparing the polyester urethane, a catalyst is typically used. Conventional catalysts include benzyl trimethyl ammonium hydroxide, tetramethyl ammonium chloride, organic tin compounds, such as dibutyl tin diaurate, dibutyl tin oxide, stannous octoate, titanium complexes, and litharge. About 0.1-5% by weight of catalyst, based on the total weight of the reactants, is typically used.

The stoichiometry of the polyester preparation is controlled by the final hydroxyl number and by the need to obtain a product of low acid number. An acid number below 10 is preferable. The acid number is defined as the number of milligrams of potassium hydroxide needed to neutralize a 1 gram sample of the polyester. Additional information on the preparation of polyester urethanes is disclosed in U.S. Patent No. 4,810,759 to which reference may be made.

An acid resin is optionally added to the coating composition to give improved color. It does this without adversely affecting the crosslinking between the anhydride and glycidyl components. The acid functional material is formed by polymerizing monomers of alkyl methacrylates, or alkyl acrylates where the alkyl groups have 1-12 carbon atoms, and ethylenically unsaturated acids or mixtures thereof. Optionally, the acid functional polymer also contains other components such as styrene, methyl styrene, and/or acrylonitrile, methacrylonitrile in amounts of about 0.1-50% by weight.

Typical alkyl acrylates, methacrylates, and other components that can be used to form the acid functional polymer are the same as those listed above with respect to the anhydride polymer.

Typically useful ethylenically unsaturated acids are acrylic acid, methacrylic acid, itaconic acid and maleic acid.

This acid resin may also contain hydroxyl functionality by using monomers such as hydroxyethylacrylate, hydroxyethyl methacrylate and hydroxypropyl acrylate. The hydroxy functionality may be introduced by a post reaction of the acid with epoxy containing compounds such as Cardura E® from Shell Chemical Company (a glycidyl ester of versatic acid) and propylene oxide.

Another optional component of the present composition is the half ester of an anhydride compound, as distinguished from a polymer, for example, the reaction product of an acid anhydride such as hexahydropthalic anhydride or a succinic anhydride, which may be substituted, for example, with a $C_1$-$C_{12}$ alkyl group, with a monofunctional or polyfunctional alcoholic solvent such as methanol or ethylene glycol. A preferred half ester is the reaction product of methylhexahydrophthalic anhydride with an alcohol such as ethylene glycol. Other alcoholic solvents are propanol, isobutanol, isopropanol, tertiary butanol, n-butanol, propylene glycol monomethyl ether and ethylene glycol monobutyl ether. Such half esters are useful for boosting the solids content of the composition. More particularly, such a half ester

is chosen to be a good solvent for the preferred phosphonium catalyst in admixture with the anhydride component. The half ester is suitably present in the amount of 2 to 25% by weight of binder, preferably 4-12%.

About 0.1-5% by weight, based on the weight of the binder of the coating composition, of a catalyst is added to enhance curing of the composition. Typical catalysts are as follows: triethylene diamine, quinuclidine, dialkyl alkanol amines such as dimethyl ethanolamine, diethyl ethanol amine, dibutyl ethanol amine, diethyl hexanol amine, lithium tertiary butoxide, tri(dimethylaminomethyl)phenol, bis(dimethylamino)propan-2-ol, N,N,$N^1$,$N^1$-tetramethyl-ethylenediamine, N-methyldiethanolamine, N,N-dimethyl-1,3-propanediamine and 1-dimethylamino-2-propanol or quaternary ammonium salts such as tert-butyl ammonium bromide and benzyl trimethyl ammonium formate. Preferred catalysts, however, are phosphonium compounds such as are disclosed in U.S. Patent No. 4,906,677, and 1,3-dialkyimidazole-2-thiones such as are disclosed in U.S. Patent No. 5,084,542; to which reference may be made. Suitable catalysts include benzyltriphenyl phosphonium chloride, tetrabutyl phosphonium chloride, 1-methyl-3-propyl-imidazole-2-thione and l-butyl-3-methylimidazole-2-thione (BTI).

Typical solvents for the coating composition include toluene, xylene, butyl acetate, ethyl benzene, higher boiling aromatic hydrocarbons, amyl acetate, ethyl acetate, propyl acetate, ethylene or propylene glycol mono alkyl ether acetates.

Generally, the present composition is applied as a coating to a substrate by conventional techniques such as spraying, dipping, draw coating, rolling, or electrostatic spraying.

The resulting coating can be dried and cured at temperatures of 100 to 200 °C. Coatings are applied to form a finish typically about 0.5-5 mils (12.7-127 µm) thick, and preferably 1-2 mils (25.4-50.8 µm) thick.

To improve weatherability of the clear finish of the coating composition, about 0.1-5% by weight, based on the weight of the binder, of an ultraviolet light stabilizer or a combination of ultraviolet light stabilizers can be added. These stabilizers include ultraviolet light absorbers, screeners, quenchers and specific hindered amine light stabilizers. Also, about 0.1-5% by weight, based on the weight of the binder, of an antioxidant can be added.

Typical ultraviolet light stabilizers that are useful are listed in U.S. Patent No. 4,906,677, previously mentioned. Particularly useful ultraviolet light stabilizers that can be used are hindered amines of piperidyl derivatives such as those disclosed in U.S. Patent 4,061,616, column 2, line 65, to column 4, line 2, and nickel compounds such as [1-phenyl-3-methyl-4-decanoylpyrazolate (5)]-Ni, bis[phenyldithiocarbamato]-Ni(II), and others listed in the above patent, column 8, line 44 to line 55.

An applicable blend of ultraviolet light stabilizers comprises 2-[2'-hydroxy-3',5'-1(1-1-dimethyl-propyl)phenyl]benzotrizole and bis-[4-(1,2,2,6,6-pentamethylpiperidyl)] 2-butyl-2-[(3,5-t-butyl-4-hydroxyphenyl)methyl] propanedioate. Although the stabilizers can be employed in any ratio, a 1:1 ratio of benzotriazole to propanedioate is preferred.

The composition can be pigmented to form a colored finish or primer. About 0.1-200% by weight, based on the weight of the binder, of conventional pigments can be added using conventional techniques in which a mill base containing pigment, dispersant and solvent is first formed. The mill base is then mixed with the composition to form a colored composition. This composition can be applied and cured as shown above.

The following Illustrative Examples illustrate the preparation of optional components for use in coating compositions according to the present invention.

## ILLUSTRATIVE EXAMPLE A

This example illustrates, as an optional component for a composition according to the present invention, a polyester urethane solution which is prepared by charging the following constituents in order into a reaction vessel equipped with a stirrer, a heating source and a reflux condenser:

| Portion 1 | Parts by Weight |
|---|---|
| 1,3-butylene glycol | 173.4 |
| 1,6-hexanediol | 163.1 |
| Trimethylol propane | 78.8 |
| Adipic acid | 403.7 |
| Toluene | 20.0 |
| Portion 2 | |
| Propylene glycol monomethyl ether acetate | 294.4 |

(continued)

| Portion 1 | Parts by Weight |
|---|---|
| Portion 3 | |
| Tone® FCP 310 (caprolactone polyol from Union Carbide) | 934.9 |
| Propylene glycol monomethyl ether acetate | 185.3 |
| Hydrocarbon solvent | 706.1 |
| Portion 4 | |
| Trimethylhexamethylene diisocyanate | 290.3 |
| Dibutyl tin dilaurate | 0.5 |
| Portion 5 | |
| Hydrocarbon solvent | 69.8 |
| Total | 3320.3 |

Portion 1 is charged in order into the reation vessel, and the constituents of Portion 1 are heated to distill water at 140-230 °C. The distillation is continued until the acid number is 6.5 to 8.5. The product is thinned and cooled to 98 to 102 °C. by charging Portion 2 into the vessel. While the constituents in the vessel are maintained at the above temperature, Portion 3 is charged to the reactor in order. Portion 4 is added to the composition at a uniform rate over a 30 minute period while the batch temperature is maintained at 98-102 °C. A sample is removed and tested for unreacted isocyanate NCO by infrared analysis. The composition is held at the above temperature until there is no unreacted isocyanate in the composition. Portion 5 then is added as a rinse and the resulting composition is allowed to cool to ambient temperatures.

Following this procedure, the resulting composition has a polymer weight solids content of about 61.0%. The polyester urethane has a Gardner-Holdt viscosity of L. The $M_n$ (number average molecular weight) is 3734.0 and the $M_w$ (weight average molecular weight) is 7818.0 (by gel permeation chromatography using polystyrene as the standard). The acid content is determined to be 4.9 Meq/g. The hydroxy number is 92.

ILLUSTRATIVE EXAMPLE B

This example illustrates, as another optional component for use in the present composition, an acid polymer, more specifically a methacrylic acid resin, which is prepared by charging the following constituents into a reactor equipped with a thermometer, stirrer, dropping funnel, and condenser:

| Portion 1 | Parts by Weight |
|---|---|
| Propylene glycol monomethyl ether acetate | 155.3 |
| Xylene | 103.5 |
| Portion 2 | |
| Butyl methacrylate | 174.8 |
| Methacrylic acid | 97.1 |
| Butyl acrylate | 140.8 |
| Styrene | 72.8 |
| Portion 3 | |
| Tertiary butyl peroxy acetate | 35.0 |
| Propylene glycol monomethyl ether acetate | 41.7 |
| Xylene | 27.8 |
| Total | 849.0 |

Portion 1 is charged into the reactor and heated to its reflux (approximately 140 °C). Portion 2 is premixed and added to the reactor dropwise over a 240 minute period. Portion 3 is premixed and added to the reactor over a 270 minute period concurrent with Portion 3. After the addition is complete, the reactor is held at reflux and then cooled and emptied.

The resulting acid polymer composition has composition of 15% styrene, 36% butyl methacrylate, 29% n-butyl acrylate, and 20% methacrylic acid. The solids content is 60% and the polymer has a Gardner-Holdt viscosity of Z-1. The polymer has a weight average molecular weight of 5000.

The following Examples illustrate the invention. All parts and percentages are on a weight basis unless otherwise indicated.

EXAMPLE 1

A. A Styrene/butyl methacrylate/butyl acrylate/itaconic acid (anhydride) copolymer in the weight ratio of 15/20/38/27 was prepared as follows. A reactor was loaded with 224.3 parts of xylene and heated to reflux temperature of 284 °F (140°C) (Part I). The following Part II was mixed, the itaconic acid added last, and then fed to the reactor simultaneously with Part III, but starting 5 minutes after the start of Part III, over a period of five hours while maintaining reflux.

| Part II | Parts by Weight |
|---|---|
| Styrene monomer | 87.8 |
| Butyl methacrylate monomer | 117.0 |
| Butyl acrylate | 222.3 |
| Xylene | 7.2 |
| Itaconic acid | 183.1 |

| Part III | Parts by Weight |
|---|---|
| Xylene | 42.9 |
| Propylene glycol monomethyl ether acetate | 29.2 |

During the polymerization, water was formed by dehydration of the polymerized itaconic acid so the anhydride was formed. This water was continuously removed by a water separator distillation apparatus until a total of 11.8 parts of water per 100 parts of itaconic acid were separated from the distillate. When the required amount of water had been stripped off, the reactor was cooled to 190-210 °F (88-99°C) and vacuum applied to remove xylene. Finally, 163.9 parts of propylene glycol monomethyl ether acetate were added under nitrogen.

This polymer solution had a Gardner-Holdt viscosity of Y to Z-2 and a measured solids of 65.0%. The anhydride content was determined to be 2.0 Meq/g and the acid content to be 0.7 Meq/g. The molecular weight was measured by gel permeation chromatography to be $M_n$ = 1800 and $M_w$ = 4200.

B. A coating composition was prepared by thoroughly blending the following:

| Component | Parts by Weight |
|---|---|
| Anhydride polymer from Part A | 47.12 |
| Epoxy 10030* | 27.62 |
| Butyl acetate | 15.46 |
| Catalyst solution** | 9.80 |
| Total | 100.00 |

*A 1:1 mixture of Denecol® EX622, a sorbitol polyglycidyl ether (from Nagase), and a 60/40 butyl methacrylate/glycidyl methacrylate copolymer from DuPont.

**28% 1-butyl-3-methylimidazole-2-thione (BTI) in butyl acetate.

A few crystals of Nile red were dissolved in the coating solution to give a clear solution. The solution was coated onto glass plates to film thickness of 1 mil (25.4 µm) (3 plates) or 8 mils (200 µm) (2 plates; controls). The plates were air-dried overnight at room temperature.

A second coating solution was prepared by adding to 100 parts of the above solution 10.00 parts of Zonyl™TE, a mixture of glycidyl-terminated TFE oligomers supplied by DuPont. A clear solution was obtained after filtration through

a 0.2 micron Millipore® filter. Eight mil coatings of this solution were applied to the three plates previously sub-coated to 1 mil thickness, and air-dried for 48 hours. One of these plates, together with one control plate, were baked at 121 °C. for one hour and then placed in soapy water. The control turned from red to blue, indicating water penetration through the top layer and into the lower layer. The coating containing the fluorinated polymer showed no color change, indicating no water penetration.

In other, similar experiments, coatings prepared as above containing Zonyl™TE that were baked showed no penetration after soaking in aqueous detergent for three days; those that were air-dried but not baked showed slight penetration, while control coatings containing no Zonyl™TE were extensively penetrated and swollen.

EXAMPLE 2

Coating solutions with and without (control) epoxy-functional fluorinated polymer were prepared as described in Example 1, with the following exceptions. A distillate fraction of Zonyl™TE, boiling at about 175 °C., was used instead of the whole oligomer mixture, and the fluoropolymer solution was prepared by mixing and reacting the Zonyl™TE fraction with anhydride resin and catalyst solution for one hour before the Epoxy 10030 and butyl acetate solvent were added. The solution containing the fluoropolymer and the control solution were both clear. Coatings from both solutions cast on to un-precoated plates and dried in air or nitrogen were also clear, confirming that a compatiblizing reaction between the Zonyl™TE and anhydride resin had occurred. The fluoropolymer modified coating was far more resistant to water penetration than was the control coating.

In subsequent experiments it was found that completely clear coatings could be obtained from similar solutions containing unfractionated Zonyl™TE, provided the oligomers were allowed to contact the anhydride resin component of the solution in the presence of BTI catalyst solution for 10 min at 80 °C. prior to adding the epoxy resin and solvent.

EXAMPLE 3

A. A non-polymeric half-ester was prepared by reacting methylhexahydrophthalic anhydride (MHHPA) and ethylene glycol in a molar ratio of about 2:1 as follows. To a solution of 2 moles of MHHPA in xylene was added 1 mole of ethylene glycol and the combined solution was heated at 250 °F. for five hours, then cooled to 150 °F. Methanol (0.16 mole) was added, and heating was continued for one hour at 150 °F. About 2% of solvent, based on total weight, was removed by distillation.

B. A fluorinated half-ester was prepared from the product of Part A as follows: 81.11 parts of the half-ester prepared in Part A, 11.11 parts of propylene glycol monomethyl ether acetate, and 7.78 parts of Zonyl™TE (as described in Example 1) were mixed. The mixture was heated and reacted at 180 °F (82°C) for two hours, followed by aging at 120 °F (49°C) for one week.

C. A clearcoat coating composition according to the present invention was prepared by separately premixing Parts I and II shown below, then thoroughly blending Parts I and II; Part I was mildly heated to dissolve the phosphonium chloride catalyst:

| Component | Parts by weight |
|---|---|
| Part I | |
| Itaconic anhydride copolymer (as described in Example 1, Part A) | 41.17 |
| Propylene glycol monomethyl ether acetate | 9.76 |
| Fluorinated half-ester (from Part B) | 7.39 |
| Xylene | 2.86 |
| Benzyl triphenyl phosphonium chloride | 0.69 |
| Part II | |
| Butyl acetate | 3.80 |
| Silica dispersion: | |
| Aerosil® R-972 (from Degussa) | 1.07 |
| XU-71950 Diglycidyl ester (from Dow) | 4.13 |
| Propylene glycol monomethyl ether acetate | 5.53 |
| XU-71950 Diglycidyl ester (from Dow) | 14.02 |

(continued)

| Component | Parts by weight |
|---|---|
| Part II | |
| Methacrylic acid resin (from Illust.Exple B) | 6.79 |
| DISLON® 1984 (50%; acrylic flow additive in xylene) | 0.23 |
| TINUVIN® 1130 (UV Screener) | 1.54 |
| TINUVIN® 292 (HALS) | 1.02 |
| TOTAL | 100.00 |

In the above list, the TINUVIN® hindered amine light stabilizer (HALS) and UV Screener were commercial products from Ciba-Geigy. The DISLON® flow additive was supplied by King Industries. The silica dispersion was prepared by grinding the three listed ingredients together in a sand mill.

The coating, which was applied by spraying the above blend, exhibited excellent resistance to liquid water and humidity, chemical resistance especially under alkaline conditions, mechanical durability (mar resistance) and other film properties.

EXAMPLE 4

A clearcoat coating composition according to the present invention was prepared by separately premixing Parts I and II shown below, then thoroughly blending Parts I and II:

| Component | Parts by weight |
|---|---|
| Part I | |
| Itaconic anhydride copolymer (as described in Ex 1, Part A) | 37.46 |
| RESIFLOW® S (Acrylic flow additive from Estron Chemical) | 0.22 |
| Propylene glycol monomethyl ether acetate | 13.43 |
| Catalyst solution* | 13.17 |
| Part II | |
| Butyl acetate | 6.54 |
| ARALDITE® CY184 (Diglycidyl ester from Ciba-Geigy) | 18.31 |
| LUMIFLON® 916 (Hydroxylated fluoropolymer from Kaneka) | 8.25 |
| TINUVIN® 1130 (UV Screener) | 1.56 |
| TINUVIN® 292 (HALS) | 1.06 |
| TOTAL | 100.00 |

*In the above list, catalyst solution refers to a solution containing 62.8% MHHPA-ethylene glycol half-ester (prepared as in Part A of Example 3), 29.9% xylene, and 7.3% of benzyl triphenyl phosphonium chloride; the catalyst components were dissolved by heating to 50-60°C.

The TINUVIN® products were as described in Example 3.

The coating, which was applied by spraying the above blend, exhibited excellent resistance to liquid water and humidity, chemical resistance under both acidic and alkaline conditions, durability and other film properties.

**Claims**

**1.** A coating composition comprising 20-80% by weight of binder components (a), (b), (c) and (d), and 80-20% by weight of organic liquid solvent, wherein said binder components comprise, based on the weight of binder:

(a) 25-90% by weight of an acrylic anhydride polymer having at least two reactive anhydride groups and comprising polymerized monomer units of (i) an ethylenically unsaturated anhydride or an ethylenically unsaturated dicarboxylic acid which has been converted to an anhydride, and (ii) monomer units selected from alkyl methacrylate, alkyl acrylate and mixtures thereof, wherein the alkyl groups contain 1-12 carbon atoms, said polymer having a weight average molecular weight of about 2,000-50,000;
(b) 5-30% by weight of an oxiranyl component having at least two reactive oxiranyl groups;
(c) 1-30% of a fluorinated polymer having a number average molecular weight of 200-20,000 and having a perfluorocarbon group of at least 4 carbon atoms, and at least one functional group that can react with component (a) and/or component (b);
(d) an effective amount of a curing catalyst; wherein components (a), (b) and (c) are separate components; and

optional component (e) comprising about 5-30%, by weight based on the weight of binder, of one or more resins selected from acrylic, polyester and polyester urethane resins that may contain hydroxyl and/or acid functionality.

2. A coating composition, according to Claim 1, which does not include optional component (e).

3. The coating composition according to Claim 2 wherein the oxiranyl component (b) is selected from a polyglycidyl ether of a polyol, an epoxy resin of epichlorohydrin and bisphenol-A, a polyglycidyl ester of a polycarboxylic acid, a polyglycidyl ester of an isocyanuarate, a glycidyl methacrylate or glycidyl acrylate-containing acrylic polymer, and compatible mixtures of any of the above.

4. The coating composition according to Claim 2 wherein the fluorinated polymer component (c) contains at least one functional group which may be terminal or pendant, selected from oxiranyl, hydroxyl, carboxyl, isocyanate, and reactive derivatives thereof.

5. The coating composition according to Claim 4 wherein the fluorinated polymer is a functional polytetrafluoro-ethylene oligomer selected from

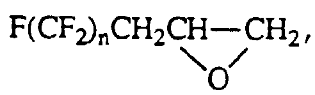

$F(CF_2)_nCH_2CH_2$-$Y^1$ and $[F(CF_2)_nCH_2CH_2$-$O(CO)]_qR^2$
wherein:

$Y^1$ is -OH or -O(CO)R;
n is 4 to about 20;
q is 2 or 3; and
$R^2$ is a di- or trivalent hydrocarbyl group of up to 6 carbon atoms also containing at least one terminal -OH group.

6. The coating composition according to Claim 1 wherein component (e) is a polyester urethane having a hydroxyl number of about 20-120 or an acid number of about 20-120.

7. The coating composition according to Claim 2 wherein the acrylic anhydride polymer component (a) comprises polymerized monomers of styrene, alkyl methacrylate or an alkyl acrylate having 2-4 carbon atoms in the alkyl group, and an ethylenically unsaturated anydride or ethylenically unsaturated dicarboxylic acid converted to anhydride.

8. The coating composition according to Claim 2 wherein the acrylic anhydride polymer component (a) comprises polymerized monomers of butyl acrylate, styrene and itaconic acid converted to anhydride.

9. The coating composition according to Claim 2 wherein the acrylic anhydride polymer component (a) comprises polymerized units of maleic anhydride.

10. The coating composition according to Claim 1 wherein component (e) is an acrylic resin formed by polymerizing monomers selected from ethylenically unsaturated acids, alkyl acrylates and methacrylates, hydroxyalkyl acrylates and methacrylates, and mixtures thereof, where the alkyl groups contain 1-12 carbon atoms.

**11.** The coating composition according to Claim 2 wherein the catalyst is a phosphonium compound or a 1,3-dialkyl-imidazole-2-thione.

**12.** The coating composition according to Claim 1 wherein the binder components further comprise about 2-25%, by weight of binder, of a half-ester which is the reaction product of a monomeric anhydride of a dicarboxylic acid and a mono- or polyhydric alcohol.

**13.** The coating composition according to Claim 12 wherein the binder components comprise 4-12%, by weight of binder, of the half-ester.

**14.** The coating composition according to Claim 12 wherein the half-ester is the reaction product of a mono- or dihydric alcohol and methylhexahydrophthalic anhydride.

**15.** The coating composition according to Claim 14 wherein the half-ester is the reaction product of at least about 2 moles of methylhexahydrophthalic anhydride and about one mole of ethylene glycol.

**16.** The coating composition according to Claim 4 wherein the fluorinated polymer is the product of reaction of one or more glycidyl-functional polytetrafluoroethylene oligomers,

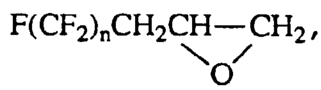

wherein n is 4 to about 20, and the half-ester of Claim 12, 14 or 15.

**17.** The coating composition according to Claim 4 wherein the fluorinated polymer is the product of reaction of one or more glycidyl-functional polytetrafluoroethylene oligomers,

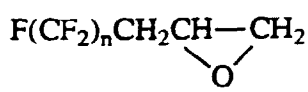

wherein n is 4 to about 20, and the acrylic anhydride polymer binder component (a).

**18.** The coating composition according to Claim 1 containing about 0.1-200% by weight, based on the weight of binder, of pigment.

**19.** A substrate coated with a cured layer of the composition according to Claim 1.

**20.** The substrate according to Claim 19 wherein said substrate is plastic, metal, glass, silicon, concrete or wood.

## Patentansprüche

**1.** Beschichtungs-Zusammensetzung, umfassend 20-80 Gew.-% der Bindemittel-Komponenten (a), (b), (c) und (d) und 80-20 Gew.-% eines organischen, flüssigen Lösungsmittels, worin die Bindemittel-Komponenten, bezogen auf das Gewicht des Bindemittels, umfassen:

(a) 25-90 Gew.-% eines acrylischen Anhydrid-Polymers mit wenigstens zwei reaktiven Anhydrid-Gruppen und umfassend polymerisierte Monomer-Struktureinheiten (i) eines ethylenisch ungesättigten Anhydrids oder einer ethylenisch ungesättigten Dicarbonsäure, die in ein Anhydrid umgewandelt wurde, und (ii) Monomer-Struktureinheiten, die aus Alklymethacrylat, Alkylacrylat und Mischungen derselben ausgewählt sind, worin die Alkylgruppen 1-12 Kohlenstoffatome enthalten, wobei das Polymer eine massengemittelte Molmasse von etwa 2000 - 50 000 hat;
(b) 5-30 Gew.-% einer Oxiranyl-Komponente mit wenigstens zwei reaktiven Oxiranyl-Gruppen;
(c) 1-30 Gew.-% eines fluorierten Polymers mit einer massengemittelten Molmasse von 200 - 20 000 und mit

einer Perfluorkohlenstoff-Gruppe mit wenigstens 4 Kohlenstoffatomen, und wenigstens einer funktionellen Gruppe, die mit der Komponente (a) und/oder der Komponente (b) reagieren kann;
(d) eine wirksame Menge eines Härtungskatalysators; worin die Komponenten (a), (b) und (c) separate Komponenten sind; und
gegebenenfalls Komponente (e), umfassend etwa 5-30 Gew.-%, bezogen auf das Gewicht des Bindemittels, eines oder mehrerer Harze, die aus acrylischen, Polyester- und Polyesterurethan-Harzen ausgewählt sind, die eine Hydroxyl- und/oder eine Säure-Funktionalität enthalten können.

**2.** Beschichtungs-Zusammensetzung gemäß Anspruch 1, die keine wahlweise Komponente (e) einschließt.

**3.** Beschichtungs-Zusammensetzung gemäß Anspruch 2, worin die Oxiranyl-Komponente (b) aus einem Polyglycidylether eines Polyols, einem Epoxyharz von Epichlorhydrin und Bisphenol-A, einem Polyglycidylester einer Polycarbonsäure, einem Polyglycidylester eines Isocyanurats, einem Glycidylmethacrylat oder Glycidylacrylat enthaltenden acrylischen Polymer und kompatiblen Mischungen der oben genannten Verbindungen ausgewählt ist.

**4.** Beschichtungs-Zusammensetzung gemäß Anspruch 2, worin die fluorierte Polymer-Komponente (c) wenigstens eine funktionelle Gruppe enthält, die terminal oder seitenständig sein kann, welche aus Oxiranyl, Hydroxyl, Carboxyl, Isocyanat und reaktiven Derivaten derselben ausgewählt ist.

**5.** Beschichtungs-Zusammensetzung gemäß Anspruch 4, worin das fluorierte Polymer ein funktionelles Polytetrafluorethylen-Oligomer ist, das aus

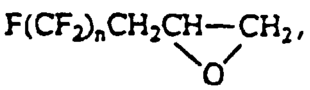

$F(CF_2)_nCH_2CH_2$-$Y^1$ und
$[F(CF_2)_nCH_2CH_2$-$O(CO)]_qR^2$ ausgewählt ist, worin

$Y^1$ -OH oder -O(CO)R ist;
n 4 bis etwa 20 ist;
q 2 oder 3 ist; und
$R^2$ eine zwei- oder dreiwertige Kohlenwasserstoff-Gruppe mit bis zu 6 Kohlenstoffatomen ist, die auch wenigstens eine terminale -OH-Gruppe enthält.

**6.** Beschichtungs-Zusammensetzung gemäß Anspruch 1, worin die Komponente (e) ein Polyesterurethan ist, das eine Hydroxylzahl von etwa 20-120 oder eine Säurezahl von etwa 20-120 aufweist.

**7.** Beschichtungs-Zusammensetzung gemäß Anspruch 2, worin die acrylische Anhydrid-Polymer-Komponente (a) polymerisierte Monomere von Styrol, Alkylmethacrylat oder einem Alkylacrylat mit 2-4 Kohlenstoffatomen in der Alkylgruppe, und ein ethylenisch ungesättigtes Anhydrid oder eine ethylenisch ungesättigte, in ein Anhydrid umgewandelte Dicarbonsäure umfaßt.

**8.** Beschichtungs-Zusammensetzung gemäß Anspruch 2, worin die acrylische Anhydrid-Polymer-Komponente (a) polymerisierte Monomere von Butylacrylat, Styrol und in ein Anhydrid umgewandelte Itaconsäure umfaßt.

**9.** Beschichtungs-Zusammensetzung gemäß Anspruch 2, worin die acrylische Anhydrid-Polymer-Komponente (a) polymerisierte Struktureinheiten von Maleinsäureanhydrid umfaßt.

**10.** Beschichtungs-Zusammensetzung gemäß Anspruch 1, worin die Komponente (e) ein Acrylharz ist, das durch Polymerisation von Monomeren gebildet wird, ausgewählt aus ethylenisch ungesättigten Säuren, Alkylacrylaten und -methacrylaten, Hydroxyalkylacrylaten und -methacrylaten und Mischungen derselben, worin die Alkylgruppen 1-12 Kohlenstoffatome enthalten.

**11.** Beschichtungs-Zusammensetzung gemäß Anspruch 2, worin der Katalysator eine Phosphonium-Verbindung oder

ein 1,3-Dialkylimidazol-2-thion ist.

**12.** Beschichtungs-Zusammensetzung gemäß Anspruch 1, worin die Bindemittel-Komponenten weiterhin etwa 2-25 %, pro Gewicht des Bindemittels, eines Halbesters umfassen, der das Reaktionsprodukt eines monomeren Anhydrids einer Dicarbonsäure und eines ein- oder mehrwertigen Alkohols ist.

**13.** Beschichtungs-Zusammensetzung gemäß Anspruch 12, worin die Bindemittel-Komponenten-etwa 4-12 %, pro Gewicht des Bindemittels, des Halbesters umfassen.

**14.** Beschichtungs-Zusammensetzung gemäß Anspruch 12, worin der Halbester das Reaktionsprodukt eines ein- oder mehrwertigen Alkohols und des Methylhexahydrophthalsäureanhydrids ist.

**15.** Beschichtungs-Zusammensetzung gemäß Anspruch 14, worin der Halbester das Reaktionsprodukt von wenigstens 2 mol Methylhexahydrophthalsäureanhydrid und etwa 1 mol Ethylenglycol ist.

**16.** Beschichtungs-Zusammensetzung gemäß Anspruch 4, worin das fluorierte Polymer das Reaktionsprodukt von einem oder mehreren glycidyl-funktionellen Polytetrafluorethylen-Oligomeren,

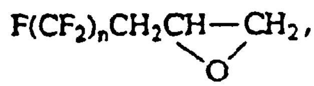

worin n 4 bis etwa 20 ist, und dem Halbester der Ansprüche 12, 14 oder 15 ist.

**17.** Beschichtungs-Zusammensetzung gemäß Anspruch 4, worin das fluorierte Polymer das Reaktionsprodukt von einem oder mehreren glycidyl-funktionellen Polytetrafluorethylen-Oligomeren,

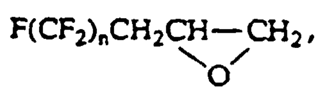

worin n 4 bis etwa 20 ist, und der acrylischen Anhydrid-Polymer-Bindemittel-Komponente (a) ist.

**18.** Beschichtungs-Zusammensetzung gemäß Anspruch 1, die etwa 0,1 - 200 Gew.-%, bezogen auf das Gewicht des Bindemittels, Pigment enthält.

**19.** Substrat, das mit einer gehärteten Schicht der Zusammensetzung gemäß Anspruch 1 beschichtet ist.

**20.** Substrat gemäß Anspruch 19, worin das Substrat Kunststoff, Metall, Glas, Silicium, Zement oder Holz ist.

## Revendications

**1.** Composition de revêtement comprenant 20 à 80% en poids de composants liants (a), (b), (c) et (d), et 80 à 20% en poids de solvant liquide organique, dans laquelle lesdits composants liants comprennent, par rapport au poids du liant:

(a) 25 à 90% en poids d'un polymère d'anhydride acrylique ayant au moins deux groupes anhydrides réactifs et comprenant des motifs monomères polymérisés (i) d'un anhydride éthyléniquement insaturé ou d'un acide dicarboxylique éthyléniquement insaturé qui a été converti en un anhydride, et (ii) des motifs monomères choisis parmi les méthacrylates d'alkyle, les acrylates d'alkyle et leurs mélanges, dans lesquels le groupe alkyle contient 1 à 12 atomes de carbone, ledit polymère ayant une masse moléculaire moyenne en poids d'environ 2 000 à 50 000;
(b) 5 à 30% en poids d'un composant oxiranyle ayant au moins deux groupes oxiranyle réactifs;
(c) 1 à 30% d'un polymère fluoré ayant une masse moléculaire moyenne en nombre de 200 à 20 000 et ayant un groupe perfluorocarboné d'au moins 4 atomes de carbone, et au moins un groupe fonctionnel qui peut

réagir avec le composant (a) et/ou le composant (b);

(d) une quantité efficace d'un catalyseur de durcissement;

dans laquelle les composants (a), (b) et (c) sont des composants séparés; et

un composant facultatif (e) représentant environ 5 à 30%, en poids par rapport au poids du liant, d'une ou plusieurs résines choisies parmi les résines acryliques, polyesters et polyester uréthannes qui peuvent contenir une fonctionnalité hydroxyle et/ou acide.

**2.** Composition de revêtement selon la revendication 1, qui n'inclut pas le composant facultatif (e).

**3.** Composition de revêtement selon la revendication 2, dans laquelle le composant oxiranyle (b) est choisi parmi un éther polyglycidylique d'un polyol, une résine époxy d'épichlorhydrine et de bisphénol-A, un ester polyglycidylique d'un acide polycarboxylique, un ester polyglycidylique d'un isocyanurate, un polymère acrylique contenant du méthacrylate de glycidyle ou de l'acrylate de glycidyle, et les mélanges compatibles de n'importe lesquels des précédents.

**4.** Composition de revêtement selon la revendication 2, dans laquelle le composant polymère fluoré (c) contient au moins un groupe fonctionnel qui peut être terminal ou pendant, choisi parmi les groupes oxiranyle, hydroxyle, carboxyle, isocyanate et leurs dérivés réactifs.

**5.** Composition de revêtement selon la revendication 4, dans laquelle le polymère fluoré est un oligomère polytétrafluoroéthylène fonctionnel choisi parmi:

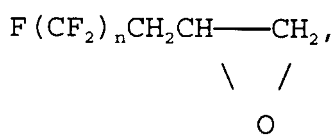

$F(CF_2)_nCH_2CH_2\text{-}Y^1$ et $[F(CF_2)_nCH_2CH_2\text{-}O(CO)]_qR^2$

dans laquelle:

$Y^1$ est -OH ou -O(CO)R;

n vaut 4 à environ 20;

q vaut 2 ou 3; et

$R^2$ est un groupe hydrocarbyle di- ou trivalent ayant jusqu'à 6 atomes de carbone contenant également au moins un groupe -OH terminal.

**6.** Composition de revêtement selon la revendication 1, dans laquelle le composant (e) est un polyester uréthanne ayant un indice d'hydroxyle d'environ 20 à 120 ou un indice d'acide d'environ 20 à 120.

**7.** Composition de revêtement selon la revendication 2, dans laquelle le composant polymère d'anhydride acrylique (a) comprend des monomères polymérisés de styrène, d'un méthacrylate d'alkyle ou d'un acrylate d'alkyle ayant 2 à 4 atomes de carbone dans le groupe alkyle, et un anhydride éthyléniquement insaturé ou un acide dicarboxylique éthyléniquement insaturé converti en anhydride.

**8.** Composition de revêtement selon la revendication 2, dans laquelle le composant polymère d'anhydride acrylique (a) comprend des monomères polymérisés d'acrylate de butyle, de styrène et d'acide itaconique converti en anhydride.

**9.** Composition de revêtement selon la revendication 2, dans laquelle le composant polymère d'anhydride acrylique (a) comprend des motifs polymérisés d'anhydride maléique.

**10.** Composition de revêtement selon la revendication 1, dans laquelle le composant (e) est une résine acrylique formée par la polymérisation de monomères choisis parmi les acides éthyléniquement insaturés, les acrylates et les méthacrylates d'alkyle, les acrylates et les méthacrylates d'hydroxyalkyle, et leurs mélanges, où les groupes

alkyles contiennent 1 à 12 atomes de carbone.

**11.** Composition de revêtement selon la revendication 2, dans laquelle le catalyseur est un composé du phosphonium ou une 1,3-dialkyl-imidazole-2-thione.

**12.** Composition de revêtement selon la revendication 1, dans laquelle les composants liants comprennent, de plus, environ 2 à 25%, en poids du liant, d'un hémi-ester qui est le produit de réaction d'un anhydride monomère d'un acide dicarboxylique et d'un mono- ou polyalcool.

**13.** Composition de revêtement selon la revendication 12, dans laquelle les composants liants comprennent l'hémi-ester à raison de 4 à 12% en poids du liant.

**14.** Composition de revêtement selon la revendication 12, dans laquelle l'hémi-ester est le produit de réaction d'un mono- ou dialcool et d'anhydride méthylhexahydrophtalique.

**15.** Composition de revêtement selon la revendication 14, dans laquelle l'hémi-ester est le produit de réaction d'au moins environ 2 moles d'anhydride méthylhexahydrophtalique et d'environ une mole d'éthylèneglycol.

**16.** Composition de revêtement selon la revendication 4, dans laquelle le polymère fluoré est le produit de la réaction d'un ou plusieurs oligomères polytétrafluoroéthylène à fonction glycidyle,

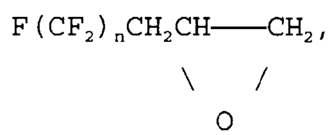

où n vaut 4 à environ 20, et de l'hémi-ester selon la revendication 12, 14 ou 15.

**17.** Composition de revêtement selon la revendication 4, dans laquelle le polymère fluoré est le produit de la réaction d'un ou plusieurs oligomères polytétrafluoroéthylène à fonction glycidyle,

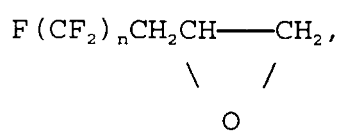

où n vaut 4 à environ 20, et du composant liant polymère d'anhydride acrylique (a).

**18.** Composition de revêtement selon la revendication 1, contenant un pigment à raison d'environ 0,1 à 200% en poids par rapport au poids du liant.

**19.** Substrat revêtu d'une couche durcie de la composition selon la revendication 1.

**20.** Substrat selon la revendication 19, dans lequel ledit substrat est en matière plastique, en métal, en verre, en silicium, en béton ou en bois.